# FASCICULE DE BREVET EUROPEEN

(11) **EP 3 619 031 B1**
(45) Date de publication et mention de la délivrance du brevet: **09.06.2021**
(21) Numéro de dépôt: 18723365.5
(22) Date de dépôt: 26.04.2018
(51) Int. Cl.: B29D 30/06

(54) **ENSEMBLE D'ELEMENTS MOULANTS POUR MOULE DE PNEUMATIQUE**
SATZ VON FORMELEMENTEN FÜR REIFENFORMEN
SET OF MOULDING ELEMENTS FOR TYRE MOULD

(30) Priorité: 05.05.2017 FR 1770458
(43) Date de publication de la demande: 11.03.2020
(73) Titulaire: Compagnie Générale des Etablissements Michelin, 63000 Clermont-Ferrand (FR)
(72) Inventeur: GOUMAULT, Pascal, 63040 Clermont-Ferrand cedex 9 (FR); MALIN, Didier, 63040 Clermont-Ferrand cedex 9 (FR)
(74) Mandataire: Roussy, Delphine
(86) Numéro de dépôt international: PCT/FR2018/051060
(87) Numéro de publication internationale: WO 2018/202987

(56) Documents cités:
- WO-A1-2015/086974
- WO-A1-2016/200392
- FR-A1- 2 759 321
- FR-A1- 3 024 060
- JP-A- H1 158 386

## Description

### DOMAINE TECHNIQUE DE L'INVENTION

La présente invention concerne un élément moulant pour le moulage d'une découpure dans une bande de roulement d'un pneumatique. L'invention concerne également un ensemble d'éléments moulants formant un réseau d'éléments moulants dans un moule.

### ETAT DE LA TECHNIQUE ANTERIEURE

On connait du document FR2939712 un ensemble d'éléments moulants formant un réseau. Les éléments moulants, ici des cordons ou des lamelles, sont fabriqués d'un seul tenant par frittage laser. Ces éléments moulants permettent de mouler des découpures dans une bande de roulement d'un pneumatique.

Le réseau formé par les éléments moulants peut avoir une taille importante. Dans certaines conditions de fabrication, ce réseau peut être soumis à des déformations non négligeables, ce qui le fait sortir des tolérances de fabrication acceptables. De plus, pour fabriquer un tel réseau, il est nécessaire de prévoir une machine de frittage laser adéquate et plus particulièrement un plateau de réception du réseau de grande dimension, ce qui augmente les coûts de fabrication. En outre, lorsqu'un élément moulant du réseau est non conforme, c'est tout le réseau qui doit être mis au rébus.

La demande WO2016/200392 décrit un ensemble d'éléments moulants adaptés pour insertion dans un moule de pneumatique, l'ensemble comprenant des lamelles longitudinales et transversales, ces dernières étant fixées de part et d'autre des lamelles longitudinales par insertion dans des élargissements desdites lamelles longitudinales. Une telle architecture permet l'assemblage des lamelles transversales lorsque les lamelles longitudinales sont pourvues des élargissements. Or, de tels élargissements ont un impact déterminant sur la forme et le fonctionnement des découpures de la bande de roulement du pneumatique. Si un tel élargissement n'est pas souhaité, il devient alors impossible de fixer les lamelles transversales.

Le document de brevet WO 2015/086974 - A divulgue un ensemble d'éléments moulants ayant les caractéristiques du préambule de la revendication 1.

Il existe donc un besoin de trouver une solution permettant d'obtenir un ensemble d'éléments moulants dans les tolérances de fabrication vouues et qui donne une grande souplesse dans l'organisation des éléments moulants entre eux.

### EXPOSE DE L'INVENTION

L'invention concerne un élément moulant pour le moulage d'une découpure dans une bande de roulement d'un pneumatique. L'élément moulant comporte un moyen d'assemblage, ce moyen d'assemblage étant apte à lier cet élément moulant avec un autre élément moulant pour former un ensemble d'éléments moulants.

L'invention prévoit un ensemble d'éléments moulants adaptés pour être inséré dans un moule pour le moulage d'un pneumatique, ledit ensemble d'éléments moulants comprenant :
- au moins un premier élément moulant et un second élément moulant, chaque élément moulant s'étendant selon une direction principale d'élément moulant (EM) entre deux extrémités dudit élément moulant ;
- et un moyen d'assemblage adapté pour assembler une des extrémités du premier élément moulant avec une des extrémités du second élément moulant par insertion dans au moins une encoche prévue dans le moyen d'assemblage, ledit moyen d'assemblage s'étendant selon un axe principal de moyen d'assemblage (MA), l'axe principal de moyen d'assemblage (MA) étant sensiblement perpendiculaire à l'axe principal d'élément moulant (EM), la hauteur (HMA) de moyen d'assemblage est au moins égale à 30% de la hauteur (HEM) de l'élément moulant, et préférentiellement au moins 50% de la hauteur (HEM) de l'élément moulant.

Cet ensemble d'éléments moulants est destiné à être rapporté dans un moule. Les moyens d'assemblage facilitent la réalisation de pré-assemblages avant mise en place dans un moule. Les assemblages donnent de multiples possibilités pour positionner des éléments moulants en vis-à-vis quelque soit la forme de l'élément moulant principal. De manière générale, le moyen d'assemblage forme une boîte d'assemblage dans laquelle des portions d'éléments moulants à assembler sont insérées, de préférence avec serrage, de façon à procurer un bon maintien.

L'imbrication entre les éléments moulants permet de garantir leur bonne tenue mécanique lors de la cuisson du pneumatique. De plus, l'ensemble d'éléments moulants comportant différents éléments moulants ainsi imbriqués est plus robuste. En outre, les différents éléments moulants peuvent être réalisés par frittage laser, ce qui permet d'obtenir des formes d'éléments moulants très complexes. En variante, une partie seulement d'un élément moulant de l'ensemble d'éléments moulants est réalisée en frittage laser, par exemple une partie géométriquement complexe de cet élément moulant. On notera que l'ensemble d'éléments moulants comportant les éléments assemblés entre eux peut être directement fixé dans un moule, par exemple, par collage. En variante, les éléments moulants de l'ensemble d'éléments moulants peuvent être « noyés » ensemble dans de l'aluminium, préalablement à la mise en place de l'ensemble d'éléments moulants dans le moule.

Dans un mode de réalisation non limitatif, le moyen d'assemblage est dans la direction sensiblement radiale. Cette orientation permet de prévoir un logement, comme par exemple une encoche ou fente ou autre, se prolongeant sur toute la hauteur ou au moins sur une longue portion de l'extrémité de l'élément moulant à assembler. On améliore ainsi la rigidité de l'assemblage des éléments moulants.

Selon une variante avantageuse, la fente a une largeur inférieure ou égale à 1 mm.

De manière avantageuse, le moyen d'assemblage est indépendant et rapporté entre les deux éléments moulants. Cet agencement permet de réaliser des assemblages de façon simple, en multipliant les combinaisons d'éléments à assembler.

Par « indépendant », on entend un moyen d'assemblage dépourvu de lamelle, ayant une fonction unique consistant à assembler deux ou plus éléments moulants voisins.

De manière avantageuse, l'élément moulant est une lamelle.

Selon un mode de réalisation avantageux, le deuxième élément moulant prolonge le premier élément moulant en faisant un angle α non nul.

Selon un autre mode de réalisation, le moyen d'assemblage est venu de matière avec l'un des éléments moulants. Cet agencement permet de simplifier les assemblages tout en augmentant la tenue mécanique.

Selon une variante avantageuse, le moyen d'assemblage comprend une pluralité d'encoches réparties sur son pourtour et forme un nœud d'assemblage pour un nombre d'éléments moulants supérieur à deux. Cette variante est particulièrement avantageuse pour permettre de relier de façon simple une pluralité d'éléments moulants à partir d'un point unique de convergence. On prévoit alors autant d'encoches que d'éléments moulants à assembler. Les orientations des encoches peuvent varier selon les agencements à constituer.

Le moyen d'assemblage peut comporter une section sensiblement circonférentielle, ou sensiblement carrée ou rectangulaire avec une encoche préférentiellement sur la pointe.

Selon une variante avantageuse, au moins un des éléments moulants comporte une extrémité en forme de pointe adaptée pour une insertion dans une encoche du moyen d'assemblage.

Selon une autre variante, au moins une encoche du moyen d'assemblage est discontinue dans la hauteur H.

Selon encore une autre variante, la profondeur de l'encoche varie en fonction de la hauteur H.

L'invention prévoit également un moule pour moulage de pneumatiques comportant au moins un ensemble d'éléments moulants tels que préalablement décrits.

### BREVE DESCRIPTION DES FIGURES

Tous les détails de réalisation sont donnés dans la description qui suit, complétée par les figures 1 à 10, présentées uniquement à des fins d'exemples non limitatifs, et dans lesquelles :
- la **figure 1** est une représentation schématique vue de dessus d'un exemple d'ensemble d'éléments moulants assemblés selon une technique connue ;
- la **figure** 2 est une représentation schématique vue de dessus d'un premier exemple d'ensemble d'éléments moulants assemblés selon l'invention ;
- La **figure 3** illustre une variante de réalisation de l'ensemble d'éléments moulants de la figure 2 ;
- la **figure 4** est une vue en perspective d'un autre exemple d'ensemble d'éléments moulants assemblés ;
- les **figures 5 à 7** sont des représentations schématiques vue des dessus d'exemples de boites d'assemblage :
- la **figure 8** est une vue en élévation d'une variante de moyen d'assemblage;
- la **figure 9** illustre schématiquement une boîte d'assemblage servant de carrefour d'assemblage pour une pluralité d'éléments moulants ;
- la **figure 10** présente un élément moulant avec son axe principal et une boîte d'assemblage avec son axe principal.

### DESCRIPTION DETAILLEE DE L'INVENTION

### DEFINITIONS

Par « pneumatique », on entend tous les types de bandages élastiques soumis à une pression interne ou non.

Par « bande de roulement » d'un pneumatique, on entend une quantité de matériau en caoutchouc délimitée par des surfaces latérales et par deux surfaces principales dont l'une est destinée à entrer en contact avec une chaussée lorsque le pneumatique roule et l'autre est orienté vers l'intérieur du pneu.

Par « découpure dans une bande de roulement » on entend soit une découpure fine également appelée incision, soit une découpure large également appelée rainure.

Par « élément moulant », on entend un élément disposé dans un moule apte à réaliser des découpures dans la bande de roulement d'un pneumatique. Un élément moulant apte à réaliser une incision dans la bande de roulement est appelé une lamelle. Un élément moulant apte à réaliser une rainure dans la bande de roulement est appelé un cordon.

Par « zone d'ancrage d'un élément moulant » on entend la portion de l'ensemble d'éléments moulants se trouvant insérée dans la masse du moule lorsque ce dernier est mis en œuvre.

Par « zone de moulage d'un élément moulant », on entend la portion de l'élément moulant se trouvant hors de la masse du moule lorsque ce dernier est mis en œuvre, et servant à mouler les découpures de la bande de roulement du pneumatique.

Par « direction radiale », on entend une direction correspondant sensiblement à l'orientation du rayon d'une roue sur laquelle un pneumatique moulé avec le dispositif selon l'invention serait monté.

Dans la description qui va suivre, des éléments sensiblement identiques ou similaires seront désignés par des références identiques.

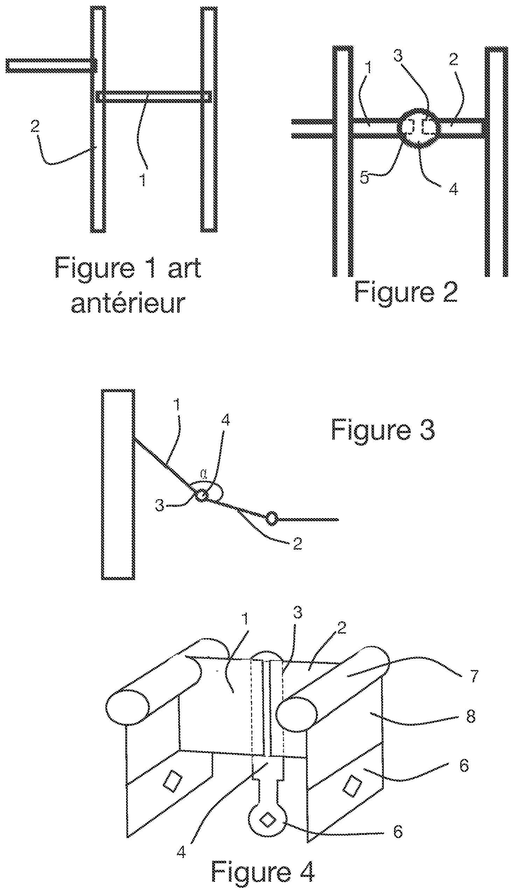

La figure 1 illustre un exemple d'assemblage d'éléments moulants selon la technique antérieure. Un tel assemblage entre éléments perpendiculaires entre eux présente de nombreuses limitations. Il est en outre plus contraignant de réaliser des assemblages avec des éléments alignés en vis-àvis comme dans l'exemple de la figure 2. Il est aussi plus contraignant de réaliser des assemblages en série, tel que dans l'exemple de la figure 3.

Les figures 2 à 4 illustrent un premier exemple de réalisation d'un ensemble d'éléments moulants adapté pour être inséré dans un moule pour le moulage d'un pneumatique. Au moment du moulage, les éléments moulants permettent de réaliser le moulage de découpures dans une bande de roulement d'un pneumatique.

Tel qu'illustré, l'ensemble comprend un premier élément moulant 1 et au moins un second élément moulant 2, par exemple monté dans le prolongement du premier élément moulant (avec ou sans angle alpha entre le premier et le second élément moulant).

La fixation du premier élément moulant 1 au second élément moulant 2 est mise en œuvre par un moyen d'assemblage 4 pouvant prendre diverses formes, selon les cas. Divers exemples de profils de moyens d'assemblage sont illustrés aux figures 4 à 8, à titre d'exemples non limitatifs. Le moyen d'assemblage a un profil généralement allongé, avec un axe principal de moyen d'assemblage MA, et au moins une encoche (ou fente) 5 orientée sensiblement parallèlement à cet axe MA.

Les éléments moulants à assembler sont généralement constitués de lamelles sensiblement allongées, s'étendant selon une direction principale d'élément moulant EM entre deux extrémités 3. L'encoche 5 est ainsi agencée sensiblement perpendiculairement à l'axe principal de l'élément moulant EM, de sorte qu'une extrémité 3 peut aisément être insérée dans une encoche 5.

Tel qu'illustré à la figure 4, l'encoche 5 se trouve avantageusement dans la zone moulante 8 de l'élément moulant. Le profil et les dimensions de l'encoche 5 sont prévues pour permettre une insertion aisée mais avec un maintien ferme de l'extrémité 3 de l'élément moulant.

Afin de favoriser le maintien mécanique entre les pièces, la hauteur HMA du moyen d'assemblage 4 est au moins égale à 30% de la hauteur HEM de l'élément moulant 1 ou 2 et préférentiellement au moins 50% de la hauteur HEM de l'élément moulant.

L'assemblage peut être mis en œuvre à partir de diverses approches. Par exemple, le moyen d'assemblage 4 est indépendant et rapporté entre les éléments moulants à assembler. On obtient ainsi une grande souplesse de mise en œuvre. Selon une autre approche, le moyen d'assemblage 4 est venu de matière avec l'un des éléments moulants. L'assemblage est plus simple et la tenue mécanique encore plus efficace.

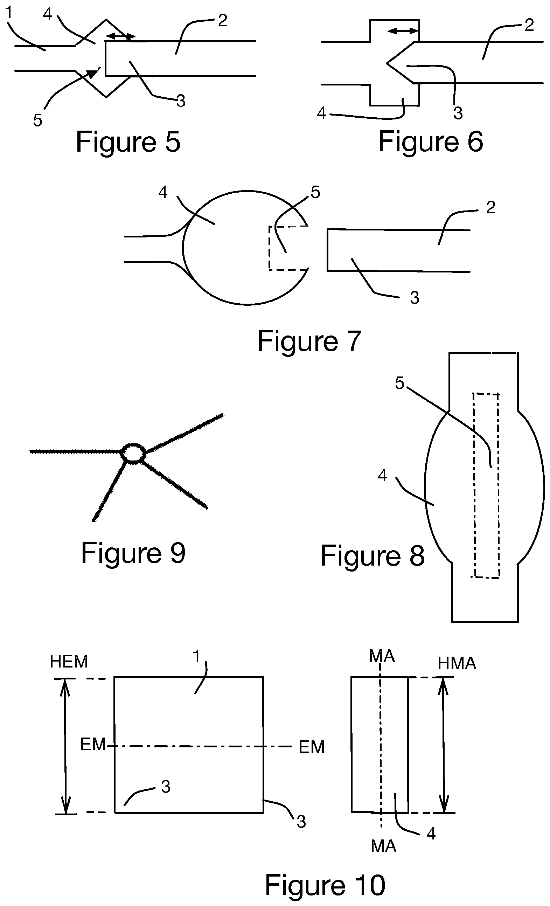

La figure 9 illustre schématiquement un mode de réalisation où le moyen d'assemblage 4 comprend une pluralité d'encoches réparties sur son pourtour, et forme ainsi un nœud d'assemblage pour une pluralité d'éléments moulants.

Les figures 5 à 7 illustrent schématiquement divers exemples non limitatifs de profils de moyens d'assemblage. Dans les exemples de réalisation des figures 5 et 6, la section du moyen d'assemblage est sensiblement carrée ou rectangulaire avec l'encoche 5 préférentiellement sur la pointe. Tel que montré à la figure 6, un des éléments moulants comporte une extrémité 3 biseautée, bien adaptée pour une insertion dans une encoche 5 du moyen d'assemblage 4. Dans l'exemple de réalisation de la figure 7, le moyen d'assemblage 4 comporte une section sensiblement circonférentielle. L'exemple de réalisation de moyen d'assemblage de la figure 8 prévoit une zone d'élargissement procurant un profil galbé orienté dans le sens axial.

Selon diverses autres variantes de réalisation non illustrées, au moins une encoche du moyen d'assemblage est discontinue dans la hauteur HMA. Par ailleurs, la profondeur de l'encoche peut varier en fonction de la hauteur HMA.

Les éléments moulants sont avantageusement fabriqués par frittage laser. En variante, ces éléments moulants sont fabriqués par tout autre procédé de fabrication, tel que la fonderie, l'usinage, ou autre.

### Numéros de référence employés sur les figures

- 1: Premier élément moulant
- 2: Second élément moulant
- 3: Extrémité d'élément moulant
- 4: Moyen d'assemblage radial
- 5: Encoche de moyen d'assemblage
- 6: Zone d'ancrage
- 7: Tube d'assemblage circonférentiel
- 8: Zone moulante

## Revendications

1. Ensemble d'éléments moulants adaptés pour être inséré dans un moule pour le moulage d'un pneumatique, ledit ensemble d'éléments moulants comprenant :
- au moins un premier élément moulant (1) et un second élément moulant (2), chaque élément moulant (1,2) s'étendant selon une direction principale d'élément moulant (EM) entre deux extrémités (3) dudit élément moulant ;
- et un moyen d'assemblage (4) adapté pour assembler une des extrémités (3) du premier élément moulant (1) avec une des extrémités (3) du second élément moulant (2) par insertion dans au moins une encoche (5) prévue dans le moyen d'assemblage, ledit moyen d'assemblage (4) s'étendant selon un axe principal de moyen d'assemblage (MA),
- l'axe principal de moyen d'assemblage (MA) étant sensiblement perpendiculaire à l'axe principal d'élément moulant (EM),
- **caractérisé en ce que** la hauteur (HMA) de moyen d'assemblage (4) est au moins égale à 30% de la hauteur (HEM) de l'élément moulant (1, 2), et préférentiellement au moins 50% de la hauteur (HEM) de l'élément moulant.

2. Ensemble d'éléments moulants selon la revendication1, dans lequel le moyen d'assemblage (4) est indépendant et rapporté entre les deux éléments moulants (1,2).

3. Ensemble d'éléments moulants selon l'une des revendications 1 ou 2, dans lequel l'élément moulant (1,2) est une lamelle.

4. Ensemble d'éléments moulants selon l'une quelconque des revendications précédentes, dans lequel le deuxième élément moulant (2) prolonge le premier élément moulant (1) en faisant un angle α non nul.

5. Ensemble d'éléments moulants selon l'une quelconque des revendications 1 à 4, dans lequel le moyen d'assemblage (4) est venu de matière avec l'un des éléments moulants (1,2).

6. Ensemble d'éléments moulants selon l'une quelconque des revendications 1 à 5, dans lequel le moyen d'assemblage (4) comprend une pluralité d'encoches (5) réparties sur son pourtour et forme un nœud d'assemblage pour un nombre d'éléments moulants (1, 2) supérieur à deux.

7. Ensemble d'éléments moulants selon l'une quelconque des revendications 1 à 6, dans lequel le moyen d'assemblage (4) comporte une section sensiblement circonférentielle.

8. Ensemble d'éléments moulants selon l'une quelconque des revendications 1 à 6, dans lequel la section du moyen d'assemblage est sensiblement carrée et/ou rectangulaire avec une encoche (5) préférentiellement sur la pointe.

9. Ensemble d'éléments moulants selon l'une quelconque des revendications précédentes, dans lequel au moins un des éléments moulants (1, 2) comporte une extrémité (3) en forme de pointe adaptée pour une insertion dans une encoche (5) du moyen d'assemblage (4).

10. Ensemble d'éléments moulants selon l'une quelconque des revendications précédentes, dans lequel au moins une encoche (5) du moyen d'assemblage (4) est discontinue dans la hauteur H.

11. Ensemble d'éléments moulants selon l'une quelconque des revendications précédentes, dans lequel la profondeur de l'encoche (5) varie en fonction de la hauteur H.

12. Moule pour moulage de pneumatiques comportant au moins un ensemble d'éléments moulants selon l'une des revendications 1 à 11.

## Patentansprüche

1. Satz von Formelementen, die geeignet sind, in eine Form zum Formen eines Reifens eingesetzt zu werden, wobei der Satz von Formelementen Folgendes umfasst:
- zumindest ein erstes Formelement (1) und ein zweites Formelement (2), wobei sich jedes Formelement (1, 2) in einer Formelementhauptrichtung (EM) zwischen zwei Formelementenden (3) erstreckt; und
- ein Verbindungselement (4), das geeignet ist, eines der Enden (3) des ersten Formelements (1) mit einem der Enden (3) des zweiten Formelements (2) durch Einsetzen in zumindest eine im Verbindungselement vorgesehene Einkerbung (5) zu verbinden, wobei sich das Verbindungselement (4) entlang einer Verbindungselementhauptachse (MA) erstreckt,
- wobei die Verbindungselementhauptachse (MA) im Wesentlichen senkrecht zur Formelementhauptachse (EM) ist,
- **dadurch gekennzeichnet, dass** die Höhe (HMA) des Verbindungselements (4) zumindest 30 % der Höhe (HEM) des Formelement (1, 2) und vorzugsweise zumindest 50 % der Höhe (HEM) des Formelements beträgt.

2. Formelementesatz nach Anspruch 1, wobei das Verbindungselement (4) unabhängig ist und zwischen den beiden Formelementen (1, 2) eingesetzt ist.

3. Formelementesatz nach einem der Ansprüche 1 bis 2, wobei das Formelement (1, 2) eine Lamelle ist.

4. Formelementesatz nach einem der vorangehenden Ansprüche, wobei das zweite Formelement (2) das erste Formelement (1) unter einem Winkel α ungleich Null verlängert.

5. Formelementesatz nach einem der Ansprüche 1 bis 4, wobei das Verbindungselement (4) mit einem der Formelemente (1, 2) einstückig ist.

6. Formelementesatz nach einem der Ansprüche 1 bis 5, wobei das Verbindungselement (4) mehrere über seinen Umfang verteilte Einkerbungen (5) umfasst und für eine Anzahl von Formelementen (1, 2), die größer als zwei ist, einen Verbindungsknoten ausbildet.

7. Formelementesatz nach einem der Ansprüche 1 bis 6, wobei das Verbindungselement (4) einen im Wesentlichen umlaufenden Querschnitt aufweist.

8. Formelementesatz nach einem der Ansprüche 1 bis 6, wobei der Querschnitt des Verbindungselements im Wesentlichen quadratisch und/oder rechteckig ist und vorzugsweise an der Spitze eine Einkerbung (5) aufweist.

9. Formelementesatz nach einem der vorangehenden Ansprüche, wobei zumindest eines der Formelemente (1, 2) ein spitzes Ende (3) aufweist, das zum Einsetzen in eine Einkerbung (5) des Verbindungselements (4) geeignet ist.

10. Formelementesatz nach einem der vorangehenden Ansprüche, wobei zumindest eine Einkerbung (5) des Verbindungselements (4) in der Höhe H diskontinuierlich ist.

11. Formelementesatz nach einem der vorangehenden Ansprüche, wobei die Tiefe der Einkerbung (5) in Abhängigkeit von der Höhe H variiert.

12. Form zum Formen von Reifen, umfassend zumindest einen Formelementesatz nach einem der Ansprüche 1 bis 11.

## Claims

1. Set of moulding elements designed to be inserted into a mould for moulding a tyre, said set of moulding elements comprising:
- at least one first moulding element (1) and one second moulding element (2), each moulding element (1, 2) extending in a main moulding-element direction (EM) between two ends (3) of said moulding element;
- and an assembly means (4) designed for joining one of the ends (3) of the first moulding element (1) to one of the ends (3) of the second moulding element (2) by insertion into at least one notch (5) provided in the assembly means, said assembly means (4) extending along a main assembly-means axis (MA),
- the main assembly-means axis (MA) being substantially perpendicular to the main moulding-element axis (EM),
- **characterized in that** the height (HMA) of the assembly means (4) is at least equal to 30% of the height (HEM) of the moulding element (1, 2), and preferably at least 50% of the height (HEM) of the moulding element.

2. Set of moulding elements according to Claim 1, wherein the assembly means (4) is independent and fitted between the two moulding elements (1, 2).

3. Set of moulding elements according to either of Claims 1 and 2, wherein the moulding element (1, 2) is a sipe blade.

4. Set of moulding element according to any one of the preceding claims, wherein the second moulding element (2) extends the first moulding element (1), forming a non-zero angle a.

5. Set of moulding elements according to any one of Claims 1 to 4, wherein the assembly means (4) is formed integrally with one of the moulding elements (1, 2).

6. Set of moulding elements according to any one of Claims 1 to 5, wherein the assembly means (4) comprises a plurality of notches (5) distributed around its perimeter and forms an assembly node for a number of moulding elements (1, 2) greater than two.

7. Set of moulding elements according to any one of Claims 1 to 6, wherein the assembly means (4) has a substantially circumferential cross section.

8. Set of moulding elements according to any one of Claims 1 to 6, wherein the cross section of the assembly means is substantially square and/or rectangular with a notch (5) preferably at the point.

9. Set of moulding elements according to any one of the preceding claims, wherein at least one of the moulding elements (1, 2) has an end (3) in the form of a point suitable for insertion into a notch (5) of the assembly means (4).

10. Set of moulding elements according to any one of the preceding claims, wherein at least one notch (5) of the assembly means (4) is discontinuous over the height H.

11. Set of moulding elements according to any one of the preceding claims, wherein the depth of the notch (5) varies depending on the height H.

12. Mould for moulding tyres, having at least one set of moulding elements according to one of Claims 1 to 11.
